Europäisches Patentamt

European Patent Office

Office européen des brevets

(11) Numéro de publication: **0 213 986**
**B1**

## (12) FASCICULE DE BREVET EUROPEEN

(45) Date de publication du fascicule du brevet:
24.10.90

(21) Numéro de dépôt: **86401544.1**

(22) Date de dépôt: **10.07.86**

(51) Int. Cl.⁵: **B29D 28/00, B29C 69/00,**
**B29C 47/20, B65D 30/06**

(54) **Procédé et dispositif pour la réalisation de films à parois ajourées.**

(30) Priorité: **11.07.85 FR 8510669**

(43) Date de publication de la demande:
**11.03.87 Bulletin 87/11**

(45) Mention de la délivrance du brevet:
**24.10.90 Bulletin 90/43**

(84) Etats contractants désignés:
**BE CH DE GB IT LI**

(56) Documents cités:
**EP-A- 0 109 470**
**CH-A- 465 156**
**FR-A- 2 093 346**
**FR-A- 2 131 842**
**FR-A- 2 138 198**
**FR-A- 2 349 432**
**FR-A- 2 529 529**
**GB-A- 2 095 609**
**US-A- 3 225 386**

(73) Titulaire: **Hureau, Jean Claude M., 56 rue Léon,**
**F-78310 Maurepas(FR)**
Titulaire: **Hureau, Jacques,**
**F-72600 Saint-Remy-Des-Monts(FR)**

(72) Inventeur: **Hureau, Jean Claude M., 56 rue Léon,**
**F-78310 Maurepas(FR)**
Inventeur: **Hureau, Jacques,**
**F-72600 Saint-Remy-Des-Monts(FR)**

(74) Mandataire: **Bonnetat, Christian et al, CABINET**
**BONNETAT 23, Rue de Léningrad, F-75008 Paris(FR)**

ACTORUM AG

## Description

La présente invention concerne un dispositif permettant la réalisation de films à parois ajourées et d'épaisseur régulière et constante en tous les points du film.

L'invention concerne également le film ainsi obtenu ainsi que les produits finis façonnés à partir de ce film.

On connaît par le certificat d'addition français, No de publication 2 131 842, un dispositif d'extrusion de filets ou grillages plastiques à partir d'une filière dont la fente d'extrusion est précédée d'un passage annulaire de largeur constante, sans toutefois que ce dispositif procure une régulation effective dans l'épaisseur du film ou du grillage ainsi obtenu.

On connaît divers procédés partant de l'extrusion d'un film en matière synthétique et dans lequel des perforations sont provoquées de façon intermittente par la mise en place de dents qui viennent obturer momentanément la filière d'extrusion.

On obtient de cette façon des films dont les surfaces comportent des lacunes ou solutions de continuité réparties de façon appropriée et notamment des films comportant des zones pleines disposées longitudinalement ou transversalement, alternant avec ces zones ajourées formées de brins de matière séparée par lesdites lacunes ou solutions de continuité.

L'inconvénient constaté dans la production de tels films est l'irrégularité dans l'épaisseur du film ainsi réalisé notamment au niveau des solutions de continuité ou lacunes dans la surface.

On constate en effet que dans les dispositifs connus, au moment où l'écoulement de la matière est interrompu, puis rétabli, pour constituer les jours et lacunes dans la paroi, des irrégularités d'épaisseur se produisent, la matière ayant tendance à former une surépaisseur au niveau des bords définissant les solutions de continuité et notamment au niveau du croisement des brins.

Cette particularité présente divers inconvénients.

En premier lieu lorsque les films ainsi conformés sont conditionnés par exemple enroulés sur une bobine, les surépaisseurs qui tombent en concordance provoquent des irrégularités dans la disposition de l'enroulement et il est difficile d'obtenir un enroulement régulier sur une grande longueur.

En outre, lorsque le film alimente une machine soit pour l'impression en continu (sur les zones pleines) ou pour le façonnage et la conformation du film en vue d'aboutir à des produits finis par exemple de sacs de conditionnement ou emballage, les irrégularités de surface provoquent un acheminement irrégulier et parfois imprévisible du film dans la machine provoquant par conséquent des défauts dans la mise en forme.

Surtour lorsque le film, au sortir de la filière est soumis à un étirement visant à accroître sa dimension et à provoquer une orientation moléculaire au niveau des brins, apte à renforcer la résistance mécanique de ces derniers, les efforts de traction étant transmis irrégulièrement en raison des inégalités d'épaisseur provoquent une répartition irrégulière de la matière; et on constate ainsi que les brins entrecroisés sensiblement à l'étirement au niveau des nœuds formés par le croisement de deux brins (généralement en surépaisseur) tandis que l'étirement affecte principalement les zones médianes des brins situés entre deux nœuds; il en résulte un étirement irrégulier d'un effet inesthétique et surtout une répartition inégale des efforts avec la constitution de zones de faiblesse.

Enfin, lorsque le film est mis en forme pour constituer un produit fini tel qu'un sac de conditionnement, les inégalités d'épaisseur réparties notamment dans les zones ajourées, produisent une surface rugueuse et agressive pour les produits conditionnés.

Pour toutes ces raisons, il est souhaitable d'obtenir un film produit en continu, présentant une surface partiellement ajourée, sans surépaisseur notamment au niveau des points de rencontre des brins définissant les zones ajourées.

L'invention vise à répondre à cette préoccupation et permet de réaliser un film présentant des zones pleines et des zones ajourées, l'épaisseur des zones pleines et des zones ajourées (constituées des brins entrecroisés) étant régulières et constantes.

A cet effet l'invention concerne un dispositif pour la fabrication d'une structure tubulaire, formé d'un film de matière synthétique extrudée, le film comportant au moins une zone longitudinale ajourée, le film, tant dans la zone ajourée que dans la zone pleine restant d'épaisseur régulière et constante, en autorisant ainsi le passage ultérieur du film sur une machine à imprimer ou sur un conformateur de façonnage, le dispositif étant du type comportant une fente d'extrusion associée à un peigne circulaire déplaçable selon un mouvement alternatif perpendiculaire au plan médian de la fente d'extrusion, ce peigne circulaire étant porteur, sur au moins une partie de son pourtour, de dents aptes à perforer le film pour provoquer (de façon connue en soi) des jours ou lacunes dans la zone ajourée du film, et la fente d'extrusion étant définie par une solution de continuité circulaire entre deux parois dont une première paroi supérieure cylindrique constitue une paroi de guidage pour le peigne et une seconde paroi formée d'une couronne inférieure et le dispositif est caractérisé par les points suivants pris en combinaison:

a) la fente d'extrusion est précédée par un passage en forme de couronne et d'épaisseur identique à la hauteur de la fente d'extrusion, qui constitue ainsi le débouché dudit passage, ce dernier étant ainsi apte à opérer un effet de lamination de la matière en cours d'écoulement et à réguler et ajuster l'épaisseur du fil, extrudé,

b) la seconde paroi inférieure définissant la fente d'extrusion est prolongée par un épaulement annulaire débordant extérieurement par rapport au prolongement virtuel de ladite première paroi cylindrique de sorte que les dents du peigne sont ainsi aptes, dans leur mouvement vers la position d'obturation, à venir porter contre la face orientée vers le haut de cet épaulement, qui se présente perpendiculairement au mouvement alternatif des dents et parallèlement à l'écoulement du film,

c) et en ce que les dents du peigne, coulissant en appui direct sur la première paroi attaquent et perforent le film en cours d'écoulement immédiatement au sortir de la fente d'extrusion.

L'invention concerne également un dispositif selon la définition ci-dessus, et caractérisé en ce que les dents du peigne sont réparties selon deux et de préférence quatre arcs de cercle aptes à provoquer, en fonction de leur déplacement alternatif, l'extrusion de deux, et de préférence quatre, zones longitudinales ajourées, les parois du film tubulaire extrudé depuis la fente d'extrusion dans la zone du peigne ne comportant pas de dents, offrant une surface continue et constituant des bandes longitudinales pleines.

D'autres caractéristiques et avantages de l'invention ressortiront de la description qui suit et qui est donnée en rapport avec une forme de réalisation particulière présentée à titre d'exemple non limitatif et intéressant notamment, la conformation du film ajouré selon l'invention pour réaliser un sac.

La figure 1 présente une vue d'un dispositif d'extrusion en vue de la mise en œuvre du procédé et de la réalisation du film de l'invention.

La figure 2 montre une vue de détail du dispositif de sortie de la filière d'extrusion de la figure 1.

La figure 3 représente une vue schématique montrant le peigne porteur des dents disposé en arc de cercle en regard du film extrudé provenant de la filière pourvue du peigne supérieur.

La figure 4 montre une section unitaire venue de la découpe transversale du film de la figure 3 après étirement.

La figure 5 montre le sac obtenu par évidement d'une partie des zones ajourées à partir de la découpe de la figure 4.

La figure 6 et la figure 7 montrent des variantes de réalisation d'un sac dans le cadre de la mise en œuvre de la présente invention.

La figure 8 représente une autre variante de mise en œuvre.

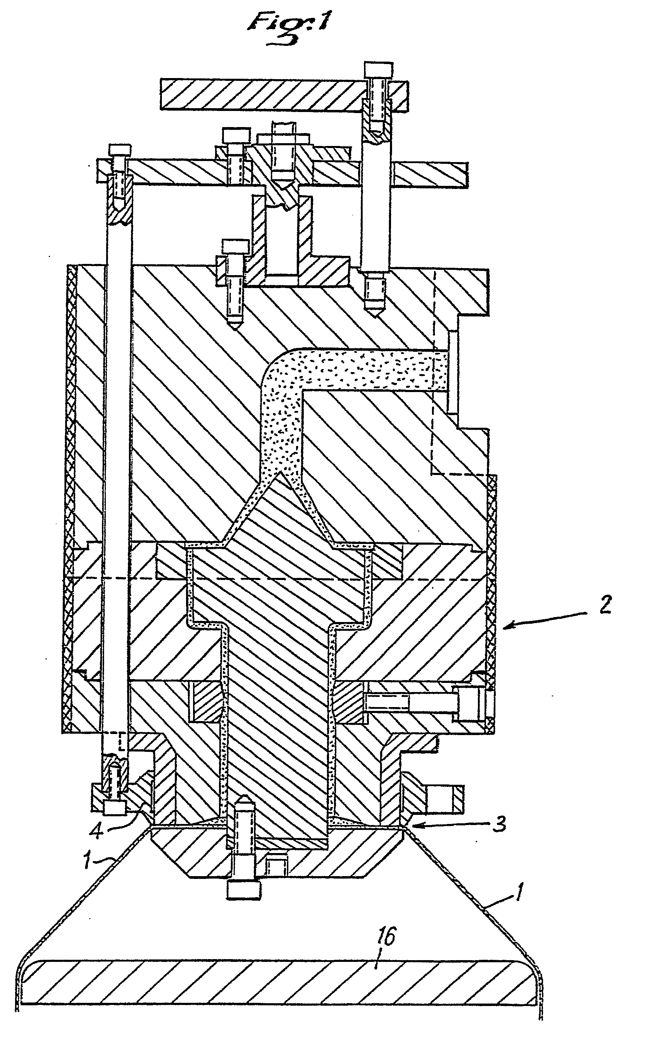

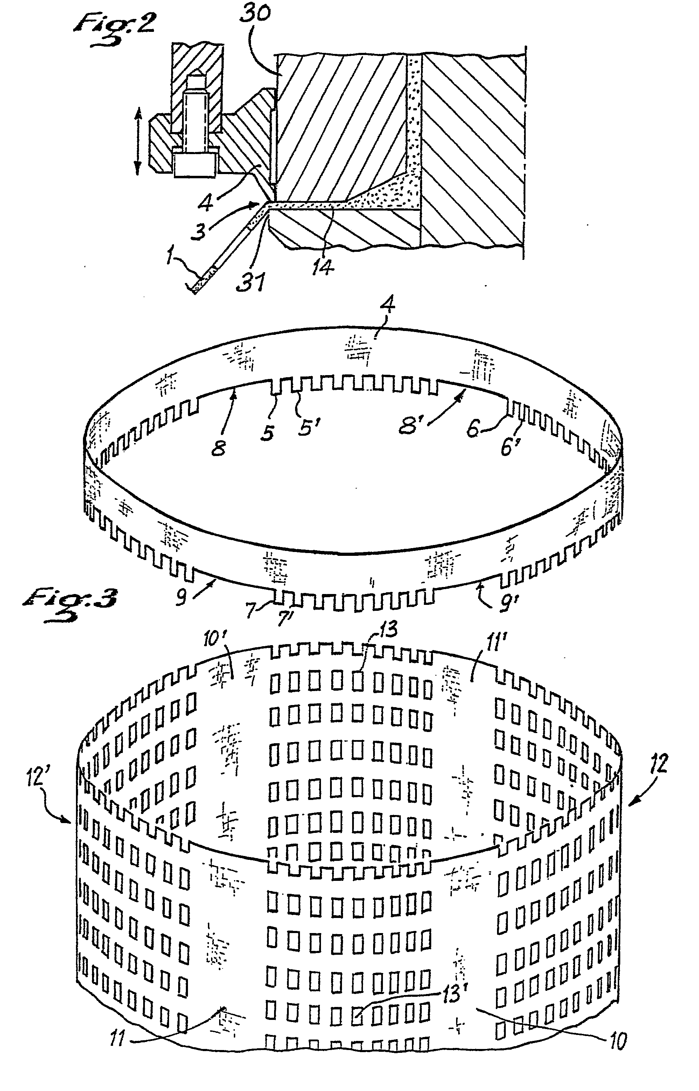

Selon l'ensemble des figures, on voit que, dans la mise en œuvre du procédé de l'invention, on extrude, de façon connue en soi, un film tubulaire 1 à partir d'une filière 2 pourvue d'une fente d'extrusion 3 mieux visible à la vue de détail de la figure 2.

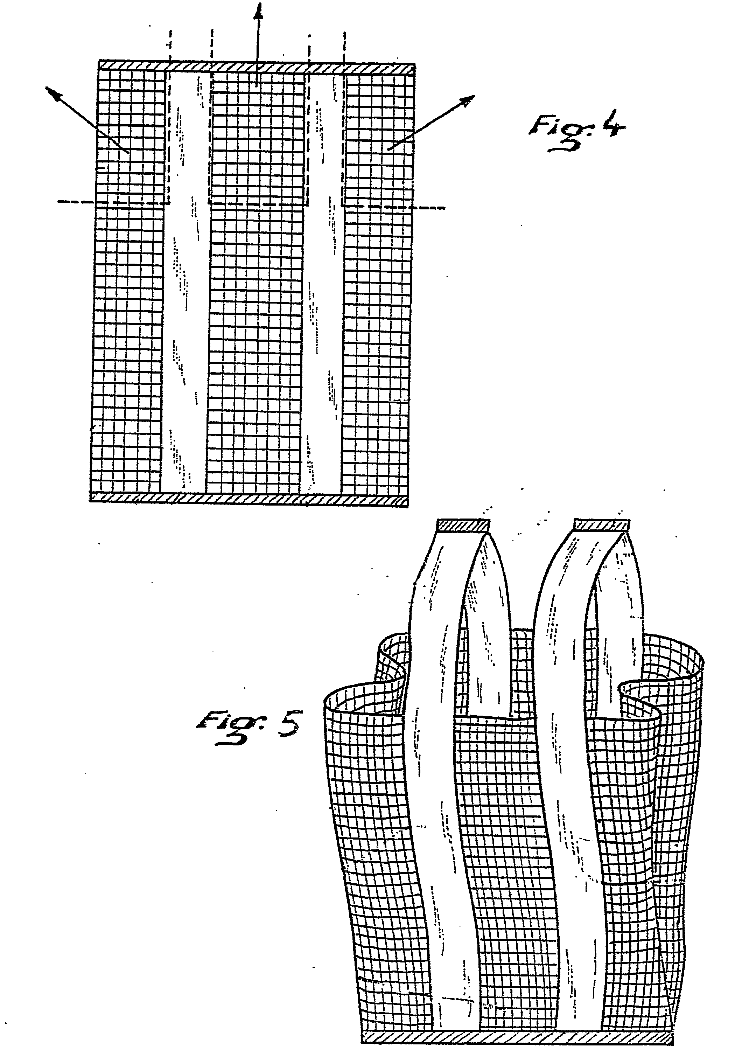

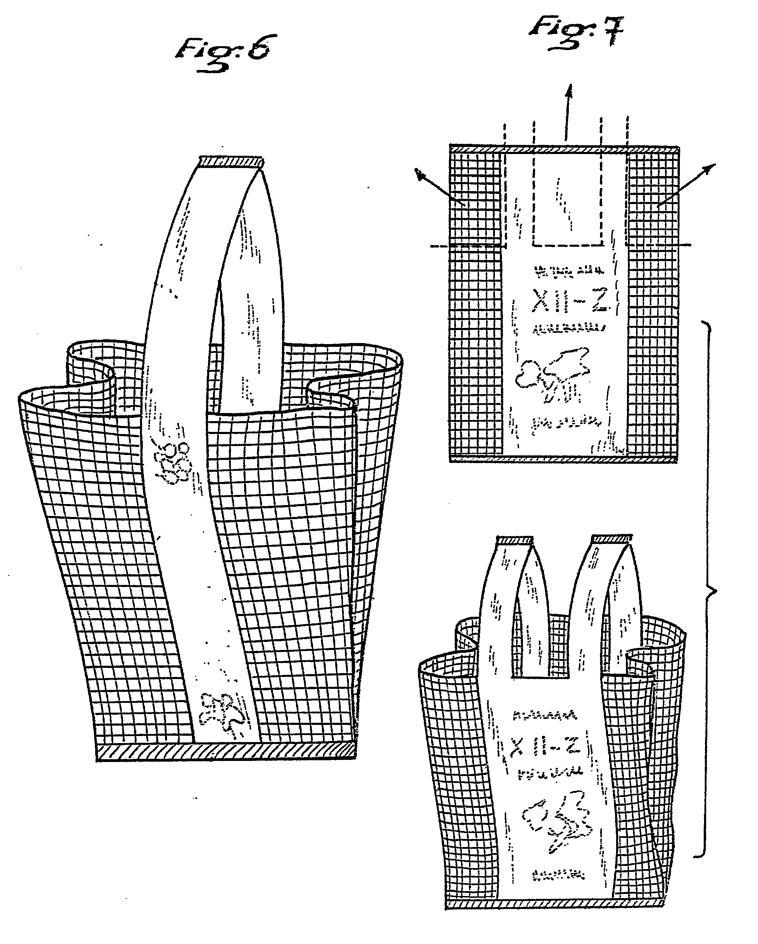

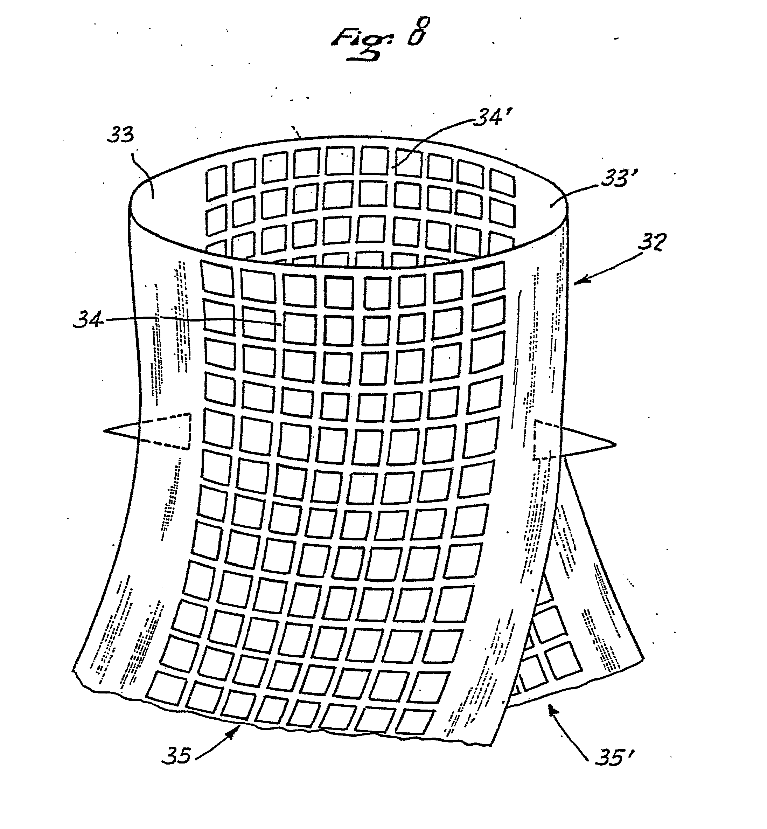

Devant cette fente d'extrusion, se déplace verticalement le peigne 4 (figures 2 et 3) pourvu des dents, 5,5',6,6',7,7'.

La fente d'extrusion 3 est définie par une solution de continuité circulaire entre deux parois dont une première paroi cylindrique 30 contre laquelle coulisse, selon un mouvement alternatif, le peigne 4 porteur des dents et une seconde paroi constituée par un épaulement circulaire 31 débordant extérieurement par rapport au prolongement virtuel de ladite première paroi cylindrique, les dents étant ainsi aptes dans leur mouvement d'extension, en position d'obturation, à venir porter contre la face de cet épaulement qui se présente perpendiculairement au mouvement alternatif des dents et parallèlement à l'écoulement du film.

Comme on le voit sur la figure 3, les dents sont réparties selon quatre arcs de cercle espacés par des zones 8,8',9,9', vides de dents.

On comprend que, dans le mouvement de déplacement alternatif du peigne 4, les zones en arc de cercle vides de dents 8,8',9,9' extrudent une bande longitudinale 10,10',11,11' continue et dépourvue de perforations.

Alors que dans les zones en arc de cercle pourvues des dents 5,5',6,6',7,7', etc..., le mouvement alternatif du peigne 4 provoque la formation des perforations visibles sur le film de la figure 3, perforations qui définissent des zones longitudinales diamétralement opposées deux à deux 12,12' et 13,13' séparant les bandes longitudinales pleines qui sont également diamétralement opposées deux à deux 10,10' et 11,11'.

Selon une particularité essentielle de l'invention, la fente d'extrusion 3 constituant la filière de sortie du film est constituée, ainsi qu'on le voit à la lumière de la figure 2, par la sortie annulaire d'un passage 14 en forme de couronne et dont l'épaisseur correspond à l'épaisseur finale du film 1.

La réserve de matière synthétique, maintenue de façon connue à l'état malléable et acheminée depuis une boudineuse de type connue, est introduite depuis la cheminée d'arrivée 15 vers le passage en forme de couronne 14, passage dans lequel l'écoulement forcé de la matière permet un effet de précalibrage de l'épaisseur du film futur et de laminage, la matière étant stabilisée en épaisseur en permettant de conférer au film 1, à la sortie de la filière 3, une surface lisse uniforme, dépourvue d'aspérités ou de surépaisseurs.

Cette caractéristique est importante dans la mesure où elle permettra d'utiliser le film pour la confection notamment de sacs ou conteneurs à parois ajourées susceptibles de passer dans des machines d'impression pour recevoir des colorations, messages, mentions publicitaires ou autres et dans les machines de façonnage automatique. Et, par ailleurs, la rigoureuse planéité du film et l'absence d'aspérités permettent l'utilisation de l'emballage pour des produits végétaux sensibles susceptibles de souffrir de la présence d'aspérités ou d'inégalités de relief, qu'il s'agisse de fruits, de tubercules ou d'oignons (fleurs ou légumes).

De façon connue en soi, à la sortie de la filière, le film 1 passe sur un conformateur 16, visible sur la figure 1, provoquant l'agrandissement dimensionnel du film tubulaire et un effet d'étirage accroissant le diamètre des perforations et permettant d'obtenir des parois ajourées allant jusqu'à une structure voisine de celle d'une grille.

L'absence de surépaisseur du film grâce à l'effet de précalibrage ou laminage procuré par le canal annulaire 14 permet un étirement régulier dans les deux sens (longitudinal et transversal) assurant une réorientation moléculaire au sein des brins, sans création de zones étirées succédant à des zones en surépaisseur, source de points de rupture. L'étirement dimensionnellement régulier procure au contraire une résistance mécanique améliorée dans les deux sens.

Dans la variante de mise en oeuvre représentée à la figure 8, on forme un film tubulaire 32 comportant deux zones pleines longitudinales sensiblement opposées 33 et 33' et séparées par deux zones ajourées 34 et 34' et on provoque le découpage longitudinal, au fur et à mesure de la formation du film, des zones pleines, sensiblement en leur centre pour obtenir deux bandes 35,35' ou film à plat constitué en son centre d'une partie ajourée pourvue de chaque côté d'une lisière pleine permettant l'utilisation du film à plat dans une machine de conditionnement automatique provoquant la soudure ou agrafage des lisières pleines.

## Revendications

1. Dispositif pour la fabrication d'une structure tubulaire formée d'un film de matière synthétique extrudée à paroi au moins partiellement ajourées, et permettant d'obtenir un film présentant une épaisseur régulière et constante autorisant notamment le passage ultérieur du film dans une machine à impression ou sur le conformateur d'une machine de façonnage, du type comportant une fente d'extrusion (3) associée à un peigne circulaire (4) déplaçable selon un mouvement alternatif perpendiculaire au plan médian de la fente d'extrusion, ce peigne étant porteur de dents apte à venir en position d'obturation devant ladite fente d'extrusion pour provoquer, de façon connue en soi des jours ou lacunes dans la surface du film, et le dispositif est caractérisé en combinaison:

a) en ce que la fente d'extrusion ou filière est précédée par un passage (14) en forme de couronne et d'épaisseur identique à la hauteur de la fente d'extrusion et ainsi apte à réguler et ajuster l'épaisseur du film extrudé;

b) et en ce que la fente d'extrusion est définie par une solution de continuité circulaire entre deux parois dont une première paroi cylindrique (30) constitue une surface d'appui du peigne (4) lequel coulisse contre ladite paroi, et une seconde paroi constituée par un épaulement annulaire (31) débordant extérieurement par rapport au prolongement virtuel de ladite première paroi cylindrique, de sorte que les dents du peigne sont ainsi aptes dans leur mouvement en position d'obturation devant la filière, à venir porter contre la face de cet épaulement qui se présente perpendiculairement aux mouvements alternatifs des dents et parallèlement à l'écoulement du film.

2. Dispositif selon la revendication 1 ci-dessus et caractérisé en outre en ce que les dents sont réparties selon deux et de préférence quatre arcs de cercle aptes à provoquer, en fonction de leur déplacement alternatif l'extrusion de deux et de préférence quatre zones longitudinales ajourées (12, 12'), (13, 13'), les parois du film tubulaire extrudées depuis la fente d'extrusion non affectées par le passage des dents offrant une surface continue et constituant des bandes longitudinales pleines (10, 10') et (11, 11').

3. Produit obtenu selon la mise en œuvre du dispositif selon la revendication 2 ci-dessus et caractérisé en ce qu'il est constitué d'un film comportant des zones longitudinales ajourées (12, 12'), (13, 13'), et des zones longitudinales pleines (10, 10'), (11, 11'), et en ce que les brins formant les zones ajourées comme les plages formant les zones pleines sont d'épaisseur régulière et constante.

4. Sac obtenu par la mise en œuvre du dispositif selon la revendication 2 ci-dessus et caractérisé en ce qu'il est constitué d'une poche venue d'un film tubulaire replié à plat et refermé par son fond selon une ligne de soudure transversale (22) et comportant de préférence deux soufflets marginaux, et deux faces de ladite poche comportant au moins une bande pleine verticale sensiblement au milieu de ladite face, les bandes étant prolongées au-delà du bord transversal ouvert de ladite poche en se rejoignant par une ligne de soudure transversale (22) en constituant ainsi une anse de préhension (32).

## Claims

1. Device for manufacturing a tubular structure formed by a film of extruded synthetic material with at least partially perforated wall, and making it possible to obtain a film presenting a regular, constant thickness allowing in particular the subsequent passage of the film in a printing machine or over the shaper of a fashioning machine, of the type comprising an extrusion slot (3) associated with a circular comb (4) adapted to be moved in a reciprocating movement perpendicular to the median plane of the extrusion slot, this comb bearing teeth adapted to come into position of obturation in front of said extrusion slot in order to provoke, in manner known per se, apertures or gaps in the surface of the film, and the device is characterized in combination:

a) in that the extrusion slot or die is preceded by a passage (14) in the form of a ring, of thickness identical to the height of the extrusion slot and thus adapted to regulate and adjust the thickness of the extruded film;

b) and in that the extrusion slot is defined by a circular gap between two walls of which a first cylindrical wall (30) constitutes a bearing surface of the comb (4) which slides against said wall, and a second wall constituted by an annular shoulder (31) projecting externally with respect to the virtual extension of said first cylindrical wall, with the result that the teeth of the comb are thus adapted in their movement in position of obturation in front of the die, to bear against the face of this shoulder which is perpendicular to the reciprocating movements of the teeth and parallel to the flow of the film.

2. Device according to Claim 1 hereinabove and characterized in addition in that the teeth are distributed along two and preferably four arcs of circle adapted to provoke, as a function of their reciprocating movement, the extrusion of two and preferably four perforated longitudinal zones (12, 12'), (13, 13'), the walls of the tubular film extruded from the extrusion slot not affected by the passage of the teeth offering a continuous surface and constituting solid longitudinal bands (10, 10') and (11, 11').

3. Product obtained by employing the device according to Claim 2 hereinabove and characterized in that it is constituted by a film comprising perforated longitudinal zones (12, 12'), (13, 13'), and solid longitudinal zones (10, 10'), (11, 11'), and in that the strands forming the perforated zones, like the areas forming the solid zones, are of regular, constant thickness.

4. Sack obtained by employing the device according to Claim 2 hereinabove and characterized in that it is constituted by a bag made from a tubular film folded flat and closed at its bottom along a transverse line of weld (22) and preferably comprising two marginal gussets, and two faces of said bag comprising at least one solid vertical band substantially at the centre of said face, the bands being extended beyond the open transverse edge of said bag, joining by a transverse line of weld (22), thus constituting a handle (32) for gripping.

**Patentansprüche**

1. Vorrichtung zur Herstellung eines schlauchförmigen, aus einer extrudierten Kunststoff-Folie mit zumindest teilweise durchbrochener Wandung bestehenden Gebildes, mittels derer eine Folie gleichbleibender und regelmäßiger Stärke, insbesondere für den späteren Durchgang durch eine Druckmaschine oder die spätere Bearbeitung mit einer Verarbeitungsmaschine erzeugt werden kann, mit einem Extrusionsschlitz (3), der mit einem senkrecht zur Mittelebene des Extrusionsschlitzes hin- und herbeweglichen, mit Zähnen ausgestatteten Rundkamm (4) zusammenwirkt, dessen Zähne so vor den Extrusionsschlitz bewegt werden können, daß sie diesen verschließen und damit in an sich bekannter Weise Öffnungen oder Aussparungen in der Folienoberfläche erzeugen, dadurch gekennzeichnet, daß

a) vor dem Extrusionsschlitz oder dem Mundstück eine Durchtrittsöffnung (14) in Kranzform vorgesehen ist, deren Stärke der Höhe des Extrusionsschlitzes entspricht, so daß mit ihrer Hilfe die stärke der gespritzten Folie reguliert und eingestellt werden kann, und daß

b) der Extrusionsschlitz von einer kreisförmigen Öffnung zwischen zwei Wandungen gebildet wird, wobei die erste zylindrische Wandung (30) eine Auflagefläche für den daran entlanggleitenden Kamm (4) bildet, während die zweite Wandung eine ringförmige, nach außen gegenüber der gedachten Verlängerung der ersten zylindrischen Wandung vorstehende Schulter (31) ausbildet, so daß die Zähne des Kammes bei ihrer Bewegung in ihre Verschließstellung vor dem Mundstück an der sich senkrecht zur Bewegungsrichtung der Zähne und parallel zur Austrittsrichtung der Folie erstreckenden Fläche zur Anlage kommen.

2. Vorrichtung nach Anspruch 1, dadurch gekennzeichnet, daß die Zähne in Form von zwei, vorzugsweise vier, Kreisbögen angeordnet sind, so daß sie in Abhängigkeit von ihrer Hin- und Herbewegung die Ausbildung von zwei, vorzugsweise vier, mit Durchbrüchen versehenen Längsbereichen (12, 12'), (13, 13') bewirken, wobei die von der Bewegung der Zähne nicht berührten Wandungsteile der aus dem Extrusionsschlitz austretenden Schlauchfolie eine durchgehende Oberfläche aufweisen und somit glatte, in Längsrichtung verlaufende Streifen (10, 10, ) und (11, 11') ausbilden.

3. Mittels der Vorrichtung nach Anspruch 2 hergestelltes Produkt, dadurch gekennzeichnet, daß es durchbrochene Längsbereiche (12, 12'), (13, 13') und glatte Längsbereiche (10, 10'), (11, 11') aufweist und daß die die durchbrochenen Bereiche bildenden Teile ebenso wie die die glatten Streifen bildenden Bereiche eine gleichmäßige und gleichbleibende Stärke aufweisen.

4. Mittels der Vorrichtung nach Anspruch 2 hergestellte Tasche, dadurch gekennzeichnet, daß sie aus einem aus einer flach zusammengelegten und an ihrem Boden entlang einer Quernaht (22) verschlossenen Schlauchfolie hergestellten Beutel besteht und vorzugsweise zwei seitliche Falten aufweist und daß zwei Flächen des Beutels im wesentlichen jeweils in ihrer Mitte einen vertikal verlaufenden glatten Streifen aufweisen, wobei die Streifen über die offene Querkante des Beutels hinaus verlängert sind, mittels einer Quernaht (22) miteinander verschweißt sind und auf diese Weise einen Henkel (32) ausbilden.

EP 0 213 986 B1

*Fig:1*

Fig.2

Fig.3

Fig. 4

Fig. 5

Fig. 6

Fig. 7

Fig. 8